# FASCICULE DE BREVET EUROPEEN

(11) **EP 0 869 272 B1**
(45) Date de publication et mention de la délivrance du brevet: **23.06.2004**
(21) Numéro de dépôt: 98400775.7
(22) Date de dépôt: 02.04.1998
(51) Int. Cl.: F02K 1/76

(54) **Inverseur de poussée protégé au déverrouillage pour turbomoteur d'aéronef**
Schubumkehrvorrichtung, die auch bei eventueller Beschädigung gegen ungewolltes Oeffnen gesichert ist
Thrust reverser which is protected against unlocking by accidental damage

(30) Priorité: 03.04.1997 FR 9704048
(43) Date de publication de la demande: 07.10.1998
(73) Titulaire: Hurel-Hispano, 76700 Gonfreville l'Orcher (FR)
(72) Inventeur: Baudu, Pierre André Marcel, 76280 Criquetot L'Esneval (FR); Gonidec, Patrick, 76290 Montivilliers (FR); Vauchel, Guy Bernard, 76610 Le Havre (FR)
(74) Mandataire: Chevalier, Renaud Philippe

(56) Documents cités:
- EP-A- 0 534 833
- EP-A- 0 656 469
- GB-A- 759 891
- US-A- 4 174 128
- US-A- 4 414 828

## Description

L'invention se rapporte aux inverseurs de poussée du type dit "à portes" pour turbomoteur d'aéronef, et plus particulièrement à un perfectionnement permettant la rétention des portes en cas d'endommagement de l'inverseur résultant par exemple de l'éclatement d'un disque du turbomoteur.

Les inverseurs de poussée pour turbomoteurs d'aéronefs sont des dispositifs biens connus permettant de renvoyer vers l'avant le flux d'air de propulsion généré par le turbomoteur, afin de réduire la vitesse de l'aéronef. Un inverseur de poussée du type dit "à portes" est une structure annulaire mince et légère entourant le turbomoteur et réalisé habituellement en tôle. L'inverseur comporte habituellement une structure fixe comportant elle-même un "cadre avant" et un "cadre arrière" tous deux de forme annulaire entourant le turbomoteur, une pluralité de poutres sensiblement parallèles reliant le cadre arrière au cadre avant, et une pluralité d'ouvertures radiales. L'inverseur comporte aussi des portes pivotantes dont la fonction est d'assurer la fermeture desdites ouvertures, ou bien de renvoyer vers l'avant le flux d'air de propulsion passant par les ouvertures lorsque les portes sont ouvertes.

L'inverseur comporte aussi des dispositifs de commande de l'ouverture et de la fermeture des portes, ainsi que des dispositifs de verrouillage desdites portes en position fermée. Un tel dispositif de verrouillage comporte habituellement un verrou solidaire de la structure fixe, le plus souvent du cadre avant, ledit verrou coopérant avec un élément à l'avant de la porte à maintenir fermée, cet élément se présentant habituellement sous la forme d'un tirant dont une extrémité est solidaire de la porte et dont l'autre extrémité est libre et saisie par le verrou (voir par exemple le document EP-A-656 469.). De tels tirants peuvent bien évidemment prendre des formes très variables. Par commodité de langage, on appellera dans ce qui suit "extrémité libre du tirant" l'élément de porte avec lequel coopère le verrou pour maintenir ladite porte en position fermée. Par le terme "avant de la porte", on désignera aussi bien l'avant proprement dit de la porte que la partie avant des faces latérales desdites portes.

Habituellement, les portes d'un inverseur de poussée sont "auto-ouvrantes", c'est à dire qu'elles tendent à s'ouvrir sous l'effet de la pression des gaz de propulsion générés par le turbomoteur, ceci étant obtenu par des pivots de porte déportés vers l'arrière desdites portes. Les portes peuvent aussi être "auto-fermantes", c'est à dire qu'elles tendent à se refermer sous l'effet de la pression des gaz de propulsion générés par le turbomoteur, les pivots de porte étant dans ce cas déportés vers l'avant desdites portes.

Habituellement, une porte d'inverseur s'ouvre par un mouvement centrifuge de sa partie avant. On connait aussi des portes dites "écope" qui s'ouvrent au contraire par un mouvement centripète.

L'ouverture accidentelle d'une porte peut avoir des conséquences catastrophiques sur le vol de l'aéronef. C'est pourquoi les dispositifs de verrouillage des portes sont habituellement redondants. Malgré cela ils restent inefficaces dans deux situations :
a) Dans le cas d'une rupture de disque moteur, l'inverseur peut subir des dommages importants : En cas d'impact de débris de disque, le cadre avant peut être gravement endommagé. Il peut alors se tordre sous l'effet des charges qui lui sont appliquées. Cette torsion peut faire pivoter les verrous qui risquent alors de se désengager et de ne plus assurer le maintien des portes de l'inverseur en position fermée. Des verrous parfaitement intacts peuvent ainsi ne plus remplir leur fonction et libérer les portes quand l'ensemble cadre/verrou(s) pivote. Ce problème est dû à la conception des verrous qui n'a pas pris en compte le scénario de déverrouillage suite à une torsion du cadre ou d'autres déplacements anormaux tendant à désengager les verrous même quand il sont fermés. Cette situation est d'autant moins optimale que les verrous de dimensions plus modestes ont moins de chances d'être impactés que le cadre lors d'une rupture de disque moteur. Par ailleurs les pivots de porte peuvent aussi être endommagés. Dans ce cas la porte se désengage par l'aval du cadre.
b) Un feu du turbomoteur peut aussi provoquer la libération des portes par la détérioration des organes commandants l'ouverture et la fermeture des verrous. Un second problème est en conséquence de rendre impossible la libération des portes en cas de feu.

Par ailleurs, le pêne d'un verrou de porte d'inverseur de poussée est un organe mobile très sollicité en fonctionnement normal, et encore plus sollicité en cas d'endommagement de la structure de l'inverseur. La réduction desdites sollicitations est en conséquence un avantage.

Afin d'empêcher la libération accidentelle de la porte en cas de déformation de l'inverseur, l'invention propose de disposer sur l'ensemble constitué par la structure fixe et le verrou de porte un crochet entourant l'extrémité libre du tirant de la porte en position fermée, ledit crochet comportant une ouverture par laquelle passe l'extrémité libre du tirant lorsqu'il arrive vers sa position fermée, ladite ouverture étant occultée par le pêne du verrou en position fermée. Par le terme "disposer un crochet sur l'ensemble constitué par la structure fixe et le verrou", il faut entendre que le crochet est solidaire soit de la structure fixe soit du verrou. Le crochet associé au pêne du verrou a pour fonction d'emprisonner contre le verrou l'extrémité libre du tirant, ce qui empêche la libération accidentelle de la porte en cas de désengagement du verrou provoqué par la déformation de la structure fixe ou l'endommagement des pivots de porte.

Le crochet peut être disposé directement sur la structure fixe. Toutefois, dans un mode de réalisation préféré, le crochet sera disposé sur le corps du verrou. Ceci permet de tenir le crochet par l'intermédiaire du verrou, ce qui évite de devoir disposer des moyens de liaison supplémentaires sur l'inverseur. L'invention peut alors être appliquée sur les inverseurs existants sans modification desdits inverseurs, par un simple remplacement du verrou existant.

Avantageusement, on aménagera à l'intérieur du crochet, et plus particulièrement sous l'extrémité dudit crochet, un logement au moins à la taille de l'extrémité libre du tirant. Ce logement a pour fonction de recevoir l'extrémité libre du tirant en cas de déformation de la structure fixe, ce qui permet alors de retenir la porte avec l'extrémité libre dudit crochet qui subira en conséquence l'effort de rétention de la porte à la place du pêne du verrou, déchargeant de ce fait ledit pêne dudit effort de rétention.

On pourra au contraire aménager sur le crochet une face d'appui en regard de l'extrémité libre du tirant de porte, cette face d'appui étant sensiblement parallèle à la trajectoire de ladite extrémité libre au voisinage de la position fermée, cette face d'appui étant tournée vers le corps du verrou. Lors d'une déformation de la structure fixe la face d'appui selon l'invention a pour fonction de s'opposer au dégagement de l'extrémité libre du tirant et de minimiser la force de réaction exercée par l'extrémité libre du tirant sur le pêne en cas de déformation de la structure fixe, ladite extrémité libre prenant appui sur le crochet.

Le fond du crochet, c'est à dire sa partie contre le verrou et opposée à l'ouverture, peut être positionné à la fin de la course de l'extrémité libre du tirant et constituer ainsi une butée limitant la course de ladite extrémité libre du tirant, afin de décharger le pêne du verrou de cette fonction, ce qui réduit les efforts qu'il doit supporter.

Dans une forme particulière de réalisation de l'invention, le crochet sera monté basculant sur le corps du verrou afin de pouvoir refermer au moins partiellement l'ouverture dudit crochet, ce crochet étant simultanément tiré en position de fermeture par un ressort et maintenu en position ouverte par une liaison thermiquement fusible avec le corps du verrou. Ainsi, en cas de feu, la liaison se rompt par fusion, ce qui libère le crochet qui se referme sous l'effet de la traction du ressort, ledit crochet maintenant alors l'extrémité du tirant emprisonnée contre le verrou même en cas d'ouverture accidentelle dudit verrou, ce qui rend impossible l'ouverture de la porte en cas d'incendie.

L'invention sera mieux comprise et les avantages qu'elle procure apparaitront plus clairement au vu de quelques exemples détaillés de réalisation et des figures annexées :

La figure 1 illustre la structure d'un inverseur de poussée du type dit "à porte" sur lequel sont appliquées les caractéristiques de l'invention.

La figure 2 illustre un exemple de mise en oeuvre de l'invention.

La figure 3 illustre une forme particulière de mise en oeuvre de l'invention dans laquelle le crochet comporte une face d'appui.

La figure 4 illustre une forme particulière de mise en oeuvre de l'invention dans laquelle le crochet assure aussi la fonction de butée de fin de course.

La figure 5 illustre un crochet fendu et renforcé par des joues latérales. Par mesure de clarté, un seul tirant a été représenté.

La figure 6 illustre un crochet fendu, renforcé par des joues latérales et ponté à son extrémité libre.

La figure 7 illustre une forme particulière de l'invention dans laquelle le crochet est monté basculant et lié au corps du verrou par un élément thermiquement fusible.

L'inverseur de poussée étant sensiblement circulaire selon un axe géométrique horizontal, et les portes étant orientées selon des angles différents du fait qu'elles sont réparties sur la circonférence de l'inverseur, on désignera pour simplifier la description par le terme haut et ses équivalents ce qui est vers l'extérieur de l'inverseur et par le terme bas et ses équivalents ce qui est vers le centre de l'inverseur.

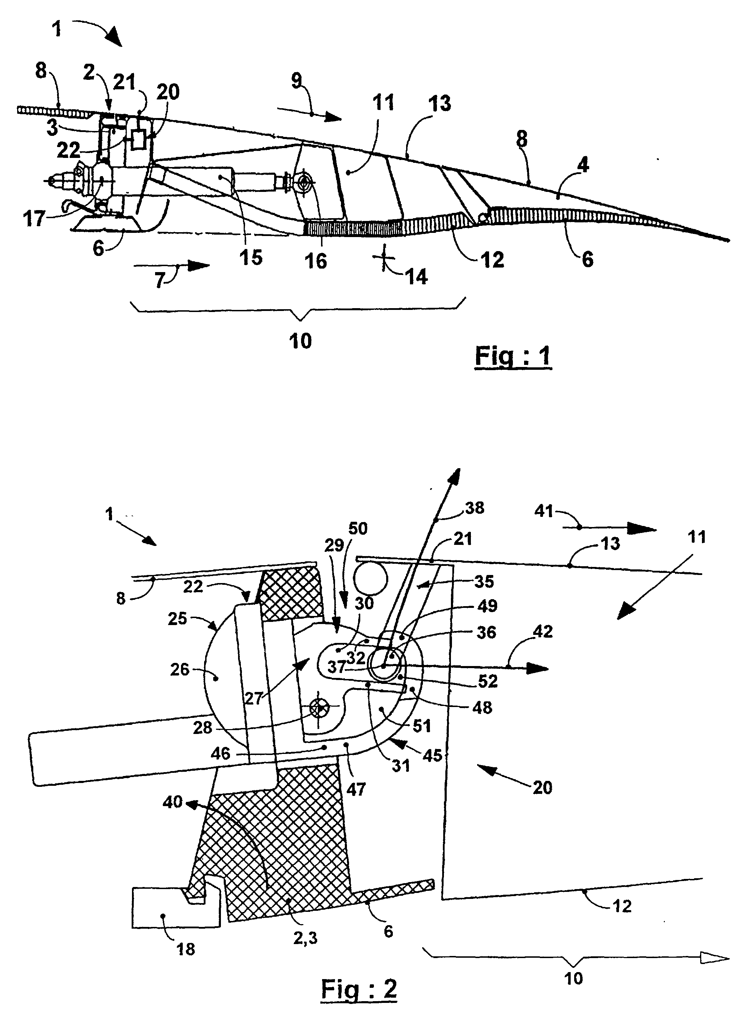

On se reportera en premier lieu à la figure 1. L'inverseur de poussée 1 a une forme générale de révolution entourant le turbomoteur non représenté. L'inverseur de poussée 1 comporte d'abord une structure fixe 2 composée essentiellement d'un cadre avant 3 et d'un cadre arrière 4 tous deux de forme annulaire, ainsi que d'une pluralité de poutres non représentées reliant le cadre avant 3 et le cadre arrière 4. La structure fixe 2 est délimitée intérieurement par une paroi intérieure 6 canalisant le flux de gaz de propulsion 7 générés par le turbomoteur non représenté, ainsi que par une paroi extérieure 8 contre laquelle s'écoule l'air ambiant 9 pendant le vol de l'aéronef. La structure fixe 2 est aussi traversée radialement par une pluralité d'ouvertures 10 occultées par des portes 11 comportant chacune une paroi intérieure 12 et une paroi extérieure 13 qui sont respectivement dans l'alignement de la paroi intérieure 6 et de la paroi extérieure 8 de la structure fixe 2. La porte 11 est montée pivotante sur la structure fixe 2 par les pivots 14 et est actionnée en position ouverte ou en position fermée par un vérin de porte 15 dont une extrémité est reliée à la porte 11 par une articulation 16 alors que son autre extrémité est reliée au cadre avant 3 par une rotule 17. La porte 11 est maintenue en position fermée par un dispositif de verrouillage 20 qui assure la liaison mécanique d'au moins un point 21 de la porte 11 à au moins un point 22 de la structure fixe 2. Habituellement, mais non obligatoirement, le point de liaison 21 sur la porte 11 est à l'extrémité avant de ladite porte 11, et le point 22 de liaison sur la structure fixe 2 est situé sur la partie du cadre avant 3 en regard de l'extrémité avant de la porte 11.

On se reportera maintenant à la figure 2. L'inverseur de poussée 1 est lié et centré sur le carter extérieur 18 du turbomoteur non représenté par son cadre avant 3. Le dispositif de verrouillage 20 comporte d'abord un verrou 25 constitué d'un corps 26 solidaire de la structure fixe 2, et d'un pêne 27 pivotant sur le corps 26 selon l'axe géométrique 28. Le pêne pivotant 27 comporte une fourche 29 composée d'une échancrure 30 délimitée de part et d'autre par une aile inférieure 31 et une aile supérieure 32. Le dispositif de verrouillage 20 comporte ensuite un tirant 35 solidaire de la porte 11 au point de liaison 21, l'extrémité libre 36 dudit tirant 35 étant dans cet exemple constituée par un galet monté pivotant sur le tirant 35 selon l'axe géométrique 37. On référencera 38 la trajectoire de l'extrémité du tirant 36 lorsque la porte pivote autour de son axe géométrique référencé 14 sur la figure 1.

Lorsque la porte 11 se referme, le pêne 27 étant tourné vers le haut, l'extrémité libre 36 du tirant 35 pénètre dans l'échancrure 30 du pêne 27 et appuie sur son aile inférieure 31, ce qui a pour effet de faire pivoter le pêne 27 vers sa position de fermeture selon l'axe géométrique de pivotement 28, et d'amener l'aile supérieure 32 au-dessus de l'extrémité du tirant 36 jusqu'à en couper la trajectoire 38. Le pêne 27 est ensuite immobilisé dans sa position fermée, ce qui provoque le verrouillage de la porte 11 en position fermée sur la structure fixe 2, l'extrémité du tirant 36 étant en appui contre l'aile supérieure 32 du pêne 27.

En cas de rupture d'un disque du turbomoteur non représenté des débris peuvent traverser le carter du turbomoteur et endommager gravement l'inverseur 1 ce qui affaiblit sa résistance structurale et augmente les déformations dudit inverseur sous l'effet des charges qui lui sont appliquées.

Notamment, le cadre avant 3 peut être vrillé suivant 40, ou les pivots de porte référencés 14 sur la figure 1 peuvent être endommagés, ce qui peut alors provoquer un déplacement de la porte 11 vers l'aval 41 de l'inverseur 1. Ces dommages peuvent en conséquence provoquer un éloignement de l'extrémité libre 36 du tirant 35 par rapport au verrou 25, ce qui a pour effet de dégager du pêne 27 l'extrémité libre 36 du tirant 35 alors que le verrou 25 est en parfait état et en position fermée. Dans le cas particulier d'un endommagement des pivots de porte référencés 11 sur la figure 1, l'extrémité libre 36 du tirant 35 tend à se déplacer selon un vecteur 42 tourné vers lesdits pivots de porte 11.

Le crochet 45 selon l'invention comporte successivement une extrémité 46 solidaire du corps 26 du verrou 25, un fond 47 s'éloignant du corps 26 du verrou 25, un montant 48, une extrémité libre 49 revenant vers le corps 26 du verrou 25 et le cadre avant 3, et une ouverture 50 tournée vers le haut entre l'extrémité libre du crochet 49 et le corps 26 du verrou 25 ou le cadre avant 3. Le fond 47 est en regard de l'ouverture 50, et la trajectoire 38 de l'extrémité libre 36 du tirant 35 passe par cette ouverture 50 lorsque l'inverseur 1 n'est pas déformé. L'aile supérieure 32 du pêne 27 ferme l'ouverture 50 du crochet 45, de sorte que l'extrémité libre 36 du tirant 35 est emprisonnée à l'intérieur 51 du crochet 45, ce qui retient emprisonnée ladite extrémité libre 36 contre le verrou 25 et empêche la libération de la porte 11 malgré les dommages subits par l'inverseur 1.

Avantageusement, on aménagera à l'intérieur 51 du crochet 45 et sous son extrémité libre 49 un logement 52 au moins à la taille de l'extrémité libre 36 du tirant 35. Ainsi, lorsque l'extrémité libre 36 du tirant 35 se déplace selon le vecteur 42 sous l'effet des dommages subits par l'inverseur 1, cette extrémité libre 36 arrive sous l'extrémité libre 49 du crochet 45 et se trouve maintenant retenue par ladite extrémité libre 49 au lieu de l'aile supérieure 32 du pêne 27, ce pêne 27 se trouvant ainsi déchargé de toutes sollicitations.

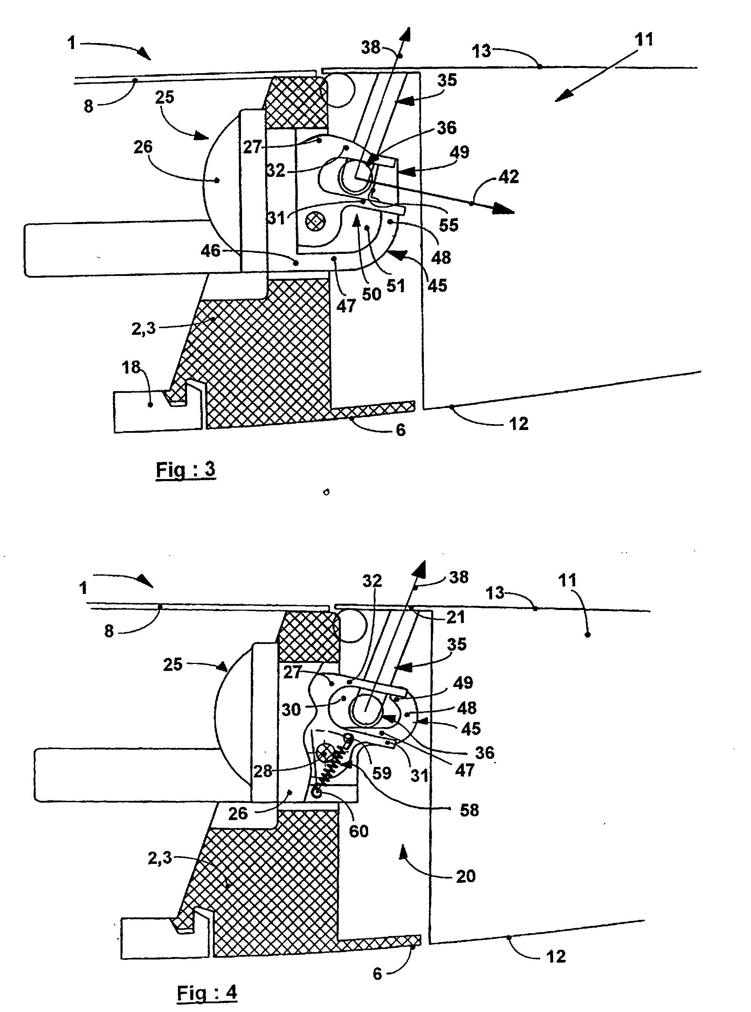

On se reportera maintenant à la figure 3. Contrairement à l'exemple de la figure 2, l'extrémité libre 49 du crochet 45 comporte une face d'appui 55 tournée vers l'extrémité libre 36 du tirant 35 et sensiblement parallèle à la trajectoire 38 de l'extrémité libre 36 du tirant 35 en position fermée. Ainsi, en cas de détérioration des pivots 14 de la porte 11, l'extrémité libre 36 du tirant 35 tend à se déplacer selon le vecteur 42 dirigé vers le pivot de porte référencé 14 sur la figure 1. La face d'appui 55 s'oppose à ce mouvement sans provoquer de réaction latérale sur l'extrémité libre 36 du tirant 35, puisqu'elle est sensiblement perpendiculaire au vecteur 42, ce qui évite d'imposer des sollicitations supplémentaires à l'aile supérieure 32 et à l'aile inférieure 31 du pêne 27. La face d'appui 55 réduit aussi ces mêmes sollicitations dans les autres cas d'endommagement de l'inverseur de poussée 1, l'homme du métier pouvant aussi modifier l'orientation de ladite face d'appui 55 afin de minimiser ces sollicitations en fonction de la structure de l'inverseur de poussée 1 et des dommages qu'il veut parer.

On se reportera maintenant à la figure 4. Dans cet exemple, le fond 47 du crochet 45 est au contact de l'extrémité libre 36 du tirant 35 en position fermée, et l'aile inférieure 31 du pêne 27 est un peu en dessous du point de contact entre le fond 47 du crochet 45 et l'extrémité libre 36 du tirant 35, ledit fond 47 faisant ainsi office de butée de fin de course pour la porte 11, ce qui décharge l'aile inférieure 31 du pêne 27 des sollicitations liées à la fonction de butée de fin de course. Avantageusement, le fond 47 du crochet 45 sera sensiblement perpendiculaire à la trajectoire 38 de l'extrémité libre 36 du tirant 35, afin de ne pas provoquer de réactions latérales qui devraient être reprises par les pivots de porte référencés 14 sur la figure 1, et d'optimiser le moment de force de verrouillage par rapport à ces pivots. Avantageusement aussi, on utilisera un verrou 25 auto-fermant dont le pêne 27 comporte deux positions stables, l'une ouverte et l'autre fermée, ledit pêne 27 étant tiré vers l'une ou l'autre de ces deux positions par un ressort 58 dont une extrémité 59 est liée au pêne 27 et l'autre extrémité 60 au corps 26 du verrou 25, le ressort 58 étant d'un côté de l'axe géométrique de pivotement 28 du pêne 27 lorsqu'il est en position ouverte, ledit ressort 58 passant de l'autre côté de l'axe de pivotement 28 du pêne 27 lorsque ledit pêne 27 passe en position fermée, un mécanisme débrayable interne au verrou 25 immobilisant le pêne 27 dans la position fermée. Le fonctionnement du dispositif de verrouillage est alors le suivant : Lorsque la porte 11 arrive vers la position fermée, le pêne 27 étant tourné vers le haut et maintenu dans sa position ouverte stable par le ressort 58, l'extrémité libre 36 du tirant 35 pénètre dans l'échancrure 30 du pêne 27, appuie sur l'aile inférieure 31 du pêne 27 et repousse ainsi le pêne 27 vers sa position fermée, ce qui a aussi pour effet de faire passer le ressort 58 de l'autre côté de l'axe géométrique de pivotement 28 du pêne 27. L'extrémité libre 36 du tirant 35 arrive en butée contre le fond 47 du crochet 45 où elle s'immobilise dans une position fixe et précise, pendant que le pêne 27 qui est toujours tiré par le ressort 58 continue sa course jusqu'à sa position fermée. Cette solution présente le double avantage de positionner avec précision la porte 11 en position fermée par rapport à la structure fixe 2, et d'éviter toute sollicitation sur l'aile inférieure 31 du pêne 27, ainsi que sur les mécanismes internes du verrou 25 de rétention dudit pêne 27.

Cette disposition est aussi avantageuse dans le cas de portes 11 "auto-fermantes", car la force exercée par la porte 11 à la fermeture est repris directement par le crochet 45, ce qui décharge le pêne 27 et le mécanisme interne au verrou 25.

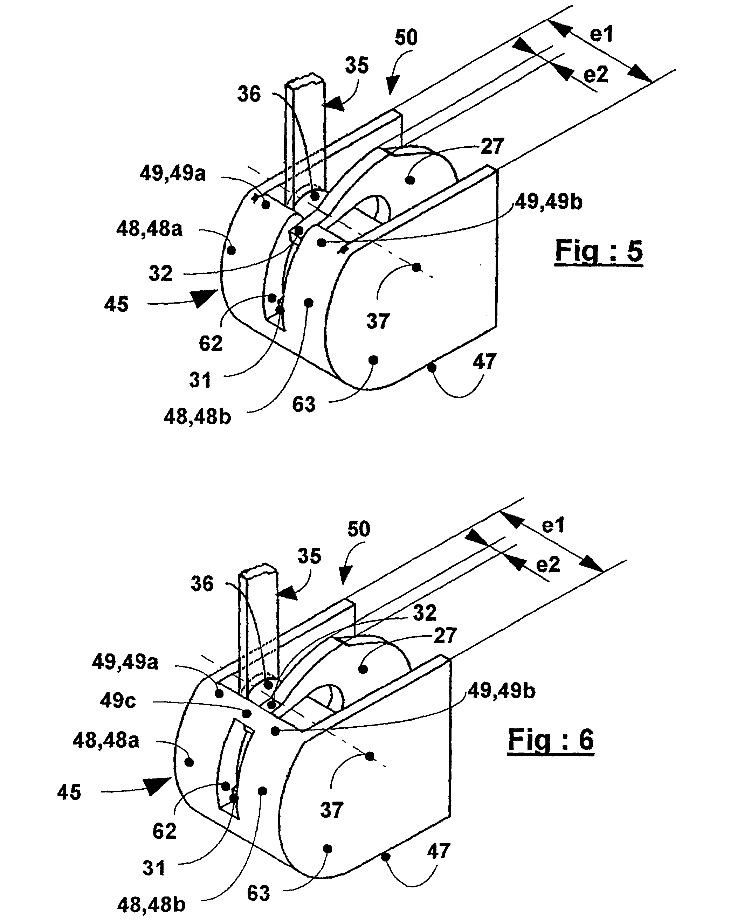

On se reportera maintenant à la figure 5. On notera qu'un seul tirant 35 est représenté afin de ne pas cacher la coopération entre le pêne 27 et l'extrémité libre 36 du tirant 35. Dans cet exemple, l'extrémité libre 36 est un galet maintenu par deux tirants 35 agissant chacun à une extrémité du galet 36. Avantageusement, le crochet 45 aura une largeur e1 supérieure à la largeur e2 du pêne 27, les largeurs e1 et e2 étant prises parallèlement à l'axe géométrique 37 de l'extrémité libre 36 du tirant 35, ledit crochet 45 comportant une fente 62 dans laquelle vient pénétrer avec un jeu limité l'extrémité de l'aile inférieure 31 du pêne 27 en position fermée, ladite fente 62 traversant en conséquence l'extrémité libre 49 et le montant 48 du crochet 45. On référencera 48a et 48b les deux parties du montant 48 ainsi séparées par la fente 62, et 49a, 49b les deux parties de l'extrémité libre du crochet 49 ainsi séparées par la fente 62. La fonction de la fente 62 est de retenir latéralement le pêne 27 par son extrémité lorsqu'il est sollicité latéralement c'est-à-dire parallèlement à son axe géométrique 37, ce qui permet de décharger des contraintes correspondantes le pêne 27 lui-même ainsi que son mécanisme non représenté de guidage et de déplacement.

Avantageusement, l'aile supérieure 32 du pêne 27 pénètrera également avec un jeu limité dans la fente 62, afin d'améliorer la rétention latérale du pêne 27 par son extrémité.

On se reportera maintenant à la figure 6. La description qui précède s'applique exactement à l'exception des caractéristiques suivantes : les deux parties 49a, 49b de l'extrémité libre 49 du crochet 45 sont reliées entre elles de façon rigide par un pont 49c qui ferme donc la fente 62. L'extrémité de l'aile inférieure 31 pénètre toujours dans la fente alors que l'extrémité de l'aile supérieure 32 est éventuellement raccourcie pour ne pas interférer avec le pont 49c. La fonction du pont 49c est de transmettre au moins partiellement à l'une des partie 48a ou 48b du montant 48 les sollicitations subies par l'autre partie 48b ou 48a. Ceci augmente la résistance globale du crochet 45, car les sollicitations qui s'appliquent sur le crocheet 45 ne se répartissent pas uniformément sur chacune des deux parties du montant 48a, 48b ou de l'extrémité libre 49a, 49b du fait des imprécisions géométriques du crochet 45 et de l'extrémité libre 36 du tirant 35.

On se reportera maintenant indifféremment à la figure 5 ou 6.

Avantageusement on renforcera le crochet 45 par des joues latérales 63 reliant l'ensemble constitué par la structure fixe et le verrou 25 non représentés avec le fond 47, le montant 48 et l'extrémité libre 49 du crochet 45, et laissant dégagée l'ouverture 50 du crochet 45. La fonction des joues latérales 63 est double :
- renforcer le crochet 45 afin d'améliorer sa capacité à retenir l'extrémité libre 36 du tirant 35.
- retenir latéralement l'extrémité libre 36 du tirant 35, afin de réduire les sollicitations latérales exercées par ladite extrémité libre 36 sur le pêne 27. Une telle disposition présente l'avantage de décharger le pêne 27 de toutes sollicitations autres que la sollicitation normale à l'ouverture de la porte.

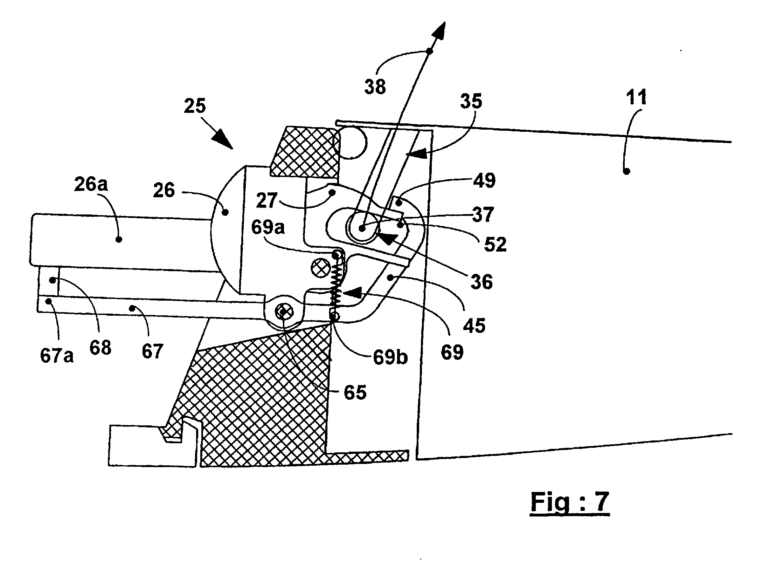

On se reportera maintenant à la figure 7. Dans un autre mode de réalisation de l'invention, permettant de renforcer le verrouillage de la porte 11 en cas d'incendie sur le turbomoteur, le crochet 45 comporte le logement 52 déjà décrit et permettant de recevoir l'extrémité libre 36 du tirant 35 sous l'extrémité libre 49 du crochet 45, ce crochet 45 étant monté basculant sur une articulation 65 solidaire du corps 26 du verrou 25, ladite articulation 65 étant disposée sous le corps 26 du verrou 25, ladite articulation 65 étant sensiblement parallèle à l'axe géométrique 37 de l'extrémité 36 du tirant 35. Le crochet 45 se prolonge de l'autre côté de l'articulation 65 par un bras 67 dont l'extrémité 67a est liée au corps 26 du verrou 25 par un élément thermiquement fusible 68. Le crochet proprement dit 45 est rappelé contre le verrou 25 par au moins un ressort de rappel 69 dont une extrémité 69a est liée au corps 26 du verrou 25 et l'autre extrémité 69b au crochet 45. Ainsi, en cas d'incendie du turbomoteur, la chaleur dégagée fait fondre l'élément thermiquement fusible 68. Le crochet 45 est alors libéré et pivote selon l'articulation 65 sous l'effet de la traction du ressort 69, ce qui a pour effet d'amener l'extrémité libre 49 du crochet 45 au-dessus de l'extrémité libre 36 du tirant 35 et pour résultat de retenir la porte 11 dans sa position verrouillée, même en cas d'ouverture accidentelle du verrou 25. La fonction du logement 52 est dans ce cas de permettre aussi le basculement du crochet 45 sous l'effet de la traction du ressort 69 sans interférence mécanique entre l'extrémité libre 36 du tirant 35 et ledit crochet 45. Dans l'exemple présenté, le verrou 25 comporte un vérin 26a solidaire du corps 26 du verrou 25, et servant à actionner le pêne 27, ce vérin 26a s'étendant à l'arrière du verrou 25. Il est dans ce cas avantageux d'allonger le bras 67 et de lier son extrémité 67a à l'extrémité du verrou 26a par la liaison thermiquement fusible 68, afin de réduire l'effort de traction que doit supporter l'élément thermiquement fusible 68, et d'augmenter ainsi l'aptitude du crochet 45 à retenir la porte 11 en cas d'endommagement de l'inverseur 1. On notera que selon la forme du corps 26 du verrou 25 et la position relative du bras 67, l'élément thermiquement fusible 68 peut être sollicité en traction comme dans le cas présent, mais aussi en compression ou en cisaillement.

Avantageusement, la forme de l'extrémité libre 49 du crochet 45 est telle que la résultante des efforts de contact avec l'extrémité libre 36 du tirant 35 place le crochet 45 dans une position d'équilibre verrouillée et stable.

Les exemples détaillés de réalisation qui viennent d'être décrits concernent des portes 11 s'ouvrant suivant un mouvement 38 centrifuge. La présente invention s'applique également aux portes de type "écope" qui s'ouvrent suivant un mouvement 38 centripète. Dans ce dernier cas, la position du crochet 45 est inversée afin que la trajectoire 38 de l'extrémité libre 36 du tirant 35 puisse toujours passer par l'ouverture 50 du crochet 45.

## Revendications

1. Inverseur de poussée protégé au déverrouillage pour turbomoteur d'aéronef, ledit inverseur (1) comportant une structure fixe (2) ainsi qu'une pluralité d'ouvertures (10) fermées par des portes (11) pivotantes, lesdites portes (11) étant maintenues en position fermée chacune par au moins un verrou (25) comportant un pêne (27) coopérant avec l'extrémité libre (36) d'un tirant (35) solidaire de la porte (11), **caractérisé en ce qu'**un crochet (45) est disposé sur l'ensemble constitué par la structure fixe (2) et le verrou (25), ledit crochet (45) entourant l'extrémité libre (36) du tirant (35) en position fermée, ledit crochet (45) comportant une ouverture (50) par laquelle passe l'extrémité libre (36) du tirant (35) lorsque ladite extrémité libre (36) arrive vers sa position fermée, ladite ouverture (50) étant fermée par le pêne (27) du verrou (25) lorsqu'il est en position fermée, afin d'emprisonner en position fermée l'extrémité libre (36) du tirant (35) contre le verrou (25).

2. Inverseur selon la revendication 1, **caractérisé en ce que** le crochet (45) est disposé sur le corps (26) du verrou (25), afin de tenir le crochet (45) par l'intermédiaire du verrou (25).

3. Inverseur selon la revendication 1 ou 2 **caractérisé en ce que** le crochet (45) comporte un logement (52) au moins à la taille de l'extrémité libre (36) du tirant (35), ledit logement (52) étant disposé sous l'extrémité libre (49) dudit crochet (45), afin de recevoir l'extrémité libre (36) du tirant (35) sous l'extrémité libre (49) dudit crochet (45) en cas de déformation de l'inverseur (1).

4. Inverseur selon l'une quelconque des revendications 1 à 3, **caractérisé en ce que** le fond (47) du crochet (45) est positionné en fin de course de l'extrémité libre (36) du tirant (35) en position fermée, afin de constituer une butée de fin de course de ladite extrémité libre (36).

5. Inverseur selon la revendication 4, **caractérisé en ce que** le verrou (25) est auto-fermant.

6. Inverseur selon la revendication 2 ou 3, **caractérisé en ce que** le crochet (45) comporte une fente 62 dans laquelle vient pénétrer avec un jeu limité l'extrémité de l'aile inférieure (31) du pêne (27), afin de retenir le pêne (27) par son extrémité lorsqu'il est sollicité latéralement.

7. Inverseur selon la revendication 6, **caractérisé en ce que** l'extrémité de l'aile supérieure (32) du pêne (27) pénètre également avec un jeu limité dans la fente (62), afin d'améliorer la rétention du pêne (27) par son extrémité.

8. Inverseur selon la revendication 6, l'extrémité libre (49) du crochet (45) étant divisée en deux parties (49a, 49b) par la fente (62), **caractérisé en ce que** lesdites parties (49a, 49b) sont reliées rigidement entre elles par un pont (49c) afin de transmettre au moins partiellement à l'une desdites parties (49a, 49b) les sollicitations subies par l'autre partie (49b, 49a).

9. Inverseur selon l'une quelconque des revendications 6 à 8, **caractérisé en ce que** le crochet (45) est renforcé par des joues latérales (63) reliant le fond (47), le montant (48) et l'extrémité libre du crochet (49) à l'ensemble constitué par la structure fixe (2) et le verrou (25).

10. Inverseur selon l'une quelconque des revendications 1 à 3, **caractérisé en ce que** le crochet (45) est monté basculant sur le corps (26) du verrou (25), **en ce que** le crochet (45) est tiré vers la position de fermeture par un ressort (69) et **en ce que** le crochet (45) est maintenu en position ouverte par une liaison thermiquement fusible (68) avec le corps (26) du verrou (25), afin de maintenir l'extrémité libre (36) du tirant (35) emprisonnée contre le verrou (25) en cas d'incendie.

11. Inverseur selon la revendication 1, **caractérisé en ce que** le crochet (45) comporte une face d'appui (55) en regard de l'extrémité libre (36) du tirant (35) lorsqu'elle est en position fermée, ladite face d'appui (55) étant sensiblement parallèle à la trajectoire (38) de l'extrémité libre (36) du tirant (35) au voisinage de la position fermée, afin de s'opposer au dégagement de ladite extrémité libre (36) et de minimiser la force de réaction latérale produite par ladite extrémité libre (36) sur le pêne (27) en cas de déformation de l'inverseur (1).

## Patentansprüche

1. Schubumkehrvorrichtung für Flugzeug-Turbotriebwerke, die gegen ungewolltes Öffnen gesichert sind, wobei diese Schubumkehrvorrichtung (1) einen festen Aufbau (2) sowie eine Vielzahl von Öffnungen (10) aufweist, die durch Schwenkklappen (11) verschlossen werden, wobei diese Schwenkklappen (11) jeweils durch mindestens eine Verriegelung (25) mit einem Riegel (27), der mit dem freien Ende (36) einer mit der Klappe (11) fest verbundenen Zugstange (35) zusammenwirkt, in Schließstellung gehalten werden,
**dadurch gekennzeichnet,**
**dass** ein Haken (45) an der aus dem festen Aufbau (2) und der Verriegelung (25) gebildeten Gesamtanordnung angeordnet ist, wobei dieser Haken (45) das freie Ende (36) der Zugstange (35) in Schließstellung umgibt, wobei dieser Haken (45) eine Öffnung (50) aufweist, durch die dieses freie Ende (36) in seine Schließstellung gelangt, wobei diese Öffnung (50) durch den Riegel (27) der Verriegelung (25) geschlossen wird, wenn er sich in Schließstellung befindet, um das freie Ende (36) der Zugstange (35) an der Verriegelung (25) in Schließstellung zu arretieren.

2. Schubumkehrvorrichtung nach Anspruch 1,
**dadurch gekennzeichnet,**
**dass** der Haken (45) an dem Körper (26) der Verriegelung (25) angeordnet ist, so dass der Haken (45) über die Verriegelung (25) gehalten wird.

3. Schubumkehrvorrichtung nach Anspruch 1 oder 2,
**dadurch gekennzeichnet,**
**dass** der Haken (45) eine Aufnahme (52) von mindestens der Größe des freien Endes (36) der Zugstange (35) aufweist, wobei diese Aufnahme (52) unter dem freien Ende (49) dieses Hakens (45) angeordnet ist, um im Falle einer Verformung der Schubumkehrvorrichtung (1) das freie Ende (36) der Zugstange (35) unter dem freien Ende (49) dieses Hakens (45) aufzunehmen.

4. Schubumkehrvorrichtung nach einem der Ansprüche 1 bis 3,
**dadurch gekennzeichnet,**
**dass** der Boden (47) des Hakens (45) in Schließstellung am Hubende des freien Endes (36) der Zugstange (35) positioniert ist, um einen Hubende-Anschlag für dieses freie Ende (36) zu bilden.

5. Schubumkehrvorrichtung nach Anspruch 1 oder 2,
**dadurch gekennzeichnet,**
**dass** die Verriegelung (25) selbstschließend ist.

6. Schubumkehrvorrichtung nach Anspruch 2 oder 3,
**dadurch gekennzeichnet,**
**dass** der Haken (45) einen Schlitz (62) aufweist, in den mit einem begrenzten Spiel das Ende des unteren Schenkels (31) des Riegels (27) eindringt, um den Riegel (27) an seinem Ende festzuhalten, wenn er seitlich belastet wird.

7. Schubumkehrvorrichtung nach Anspruch 6,
**dadurch gekennzeichnet,**
**dass** der obere Schenkel (32) des Riegels (27) ebenfalls mit einem begrenzten Spiel in den Schlitz (62) eindringt, um den Halt des Riegels (27) an seinem Ende zu verbessern.

8. Schubumkehrvorrichtung nach Anspruch 6, wobei das freie Ende (49) des Hakens (45) durch den Schlitz (62) in zwei Teile (49a, 49b) geteilt ist,
**dadurch gekennzeichnet,**
**dass** diese Teile (49a, 49b) durch einen Steg (49c) starr miteinander verbunden sind, um an den einen dieser Teile (49a, 49b) zumindest teilweise die Belastungen zu übertragen, denen der andere Teil (49b, 49a) unterworfen wird.

9. Schubumkehrvorrichtung nach einem der Ansprüche 6 bis 8,
**dadurch gekennzeichnet,**
**dass** der Haken (45) durch seitliche Wangen (63) verstärkt wird, die den Boden (47), den Stiel (48) und das freie Ende (49) des Hakens (45) mit der aus dem festen Aufbau (2) und der Verriegelung (25) gebildeten Gesamtanordnung verbinden.

10. Schubumkehrvorrichtung nach einem der Ansprüche 1 bis 3,
**dadurch gekennzeichnet,**
**dass** der Haken (45) an dem Körper (26) der Verriegelung (25) schwenkbar angebracht ist, dass der Haken (45) durch eine Feder (69) in die Schließstellung gezogen wird, und dass der Haken (45) durch eine thermisch schmelzbare Verbindung (68) mit dem Körper (26) der Verriegelung (25) in Öffnungsstellung gehalten wird, um im Falle eines Brandes das freie Ende (36) der Zugstange (35) an der Verriegelung (25) in Schließstellung zu arretieren.

11. Schubumkehrvorrichtung nach Anspruch 1,
**dadurch gekennzeichnet,**
**dass** der Haken (45) gegenüber dem freien Ende (36) der Zugstange (35) eine Anlagefläche (55) aufweist, wenn sich dieses in Schließstellung befindet, wobei diese Anlagefläche (55) im wesentlichen parallel zu der Bahn (38) des freien Endes (36) der Zugstange (35) im Bereich der Schließstellung verläuft um dem Sich-Lösen dieses freien Endes (36) entgegenzuwirken und die seitliche Reaktionskraft, die im Falle einer Verformung der Schubumkehrvorrichtung (1) von diesem freien Ende (36) auf den Riegel (27) ausgeübt wird, zu minimieren.

## Claims

1. Thrust reverser protected from unlocking for aircraft turboengine, the said reverser (1) comprising a fixed structure (2) and a plurality of openings (10) closed by pivoting doors (11), the said doors (11) each being held in a closed position by at least one latch (25) comprising a latch bolt (27) collaborating with the free end (36) of a tie (35) secured to the door (11), **characterized in that** a hook (45) is arranged on the assembly consisting of the fixed structure (2) and the latch (25), the said hook (45) surrounding the free end (36) of the tie (35) in the closed position, the said hook (45) comprising an opening (50) through which the free end (36) of the tie (35) passes when the said free end (36) nears its closed position, the said opening (50) being closed by the latch bolt (27) of the latch (25) when it is in the closed position, so as to trap the free end (36) of the tie (35) against the latch (25) in the closed position.

2. Reverser according to Claim 1, **characterized in that** the hook (45) is arranged on the body (26) of the latch (25), so as to hold the hook (45) via the latch (25).

3. Reverser according to Claim 1 or 2, **characterized in that** the hook (45) has a housing (52) at least the size of the free end (36) of the tie (35), the said housing (52) being arranged under the free end (49) of the said hook (45) so as to receive the free end (36) of the tie (35) under the free end (49) of the said hook (45) should the reverser (1) become deformed.

4. Reverser according to any one of Claims 1 to 3, **characterized in that** the bottom (47) of the hook (45) is positioned at the end of the travel of the free end (36) of the tie (35) in the closed position, so as to constitute an end-of-travel stop for the said free end (36).

5. Reverser according to Claim 4, **characterized in that** the latch (25) is self-closing.

6. Reverser according to Claim 2 or 3, **characterized in that** the hook (45) has a slot (62) which the end of the lower flange (31) of the latch bolt (27) enters with limited clearance so that the latch bolt (27) is restrained via its end when it is urged sideways.

7. Reverser according to Claim 6, **characterized in that** the end of the upper flange (32) of the latch bolt (27) also enters the slot (62) with limited clearance, so as to improve the retention of the latch bolt (27) by its end.

8. Reverser according to Claim 6, the free end (49) of the hook (45) being split into two parts (49a, 49b) by the slot (62), **characterized in that** the said parts (49a, 49b) are connected rigidly together by a bridge (49c) so as to at least partially transmit to one of the said parts (49a, 49b) the stresses experienced by the other part (49b, 49a).

9. Reverser according to any one of Claims 6 to 8, **characterized in that** the hook (45) is strengthened with lateral cheeks (63) connecting the bottom (47), the upright (48) and the free end of the hook (49) to the assembly consisting of the fixed structure (2) and the latch (25).

10. Reverser according to any one of Claims 1 to 3, **characterized in that** the hook (45) is mounted so that it can lock on the body (26) of the latch (25), **in that** the hook (45) is pulled towards the closed position by a spring (69), and **in that** the hook (45) is held in the open position by a hot-meltable connection (68) with the body (26) of the latch (25), so as to keep the free end (36) of the tie (35) trapped against the latch (25) in the event of fire.

11. Reverser according to Claim 1, **characterized in that** the hook (45) has a bearing face (55) facing the free end (36) of the tie (35) when it is in the closed position, the said bearing face (55) being more or less parallel to the path (38) of the free end (36) of the tie (35) near the closed position, so as to oppose the disengagement of the said free end (36) and to minimize the lateral reaction force produced by the said free end (36) on the latch bolt (27) should the reverser (1) become deformed.
